Europäisches Patentamt

European Patent Office

Office européen des brevets

(19)

(11) Numéro de publication : **0 438 347 A1**

# (12) DEMANDE DE BREVET EUROPEEN

(21) Numéro de dépôt : **91400083.1**

(22) Date de dépôt : **16.01.91**

(51) Int. Cl.$^5$ : **E02D 27/42, G01N 3/30**

(30) Priorité : **17.01.90 FR 9000506**

(43) Date de publication de la demande :
**24.07.91 Bulletin 91/30**

(84) Etats contractants désignés :
**AT BE CH DE DK ES GB GR IT LI LU NL SE**

(71) Demandeur : **ETAT FRANCAIS -
LABORATOIRE CENTRAL DES PONTS ET
CHAUSSEES
58 Boulevard Lefebvre
F-75732 Paris Cédex 15 (FR)**

(72) Inventeur : **Lepert, Philippe
4, rue de Granville
F-44710 Port Saint Pere (FR)**

(74) Mandataire : **Hasenrader, Hubert et al
Cabinet BEAU DE LOMENIE 55, rue
d'Amsterdam
F-75008 Paris (FR)**

(54) **Procédé et dispositif pour contrôler le scellement d'un poteau.**

(57) La masse M du massif de fondation (4) supportant le poteau (1) et la raideur de liaison sol/massif K déterminés en rapprochant la fonction de transfert T(w) calculée à partir de la mesure d'un choc vertical f(t) appliqué au pied (2) du poteau (1) et de la mesure des vibrations verticales x(t) correspondantes du massif (4), de la fonction de transfert théorique (21) d'un système (6) à deux degrés de liberté, à l'aide d'un logiciel dit d'analyse modale.

Fig. 6

Jouve, 18, rue Saint-Denis, 75001 PARIS

# PROCEDE ET DISPOSITIF POUR CONTROLER LE SCELLEMENT D'UN POTEAU

L'invention a pour objet des procédés et des dispositifs pour vérifier le scellement d'un poteau et notamment d'un poteau électrique.

Plus précisément l'invention a pour objet des procédés et des dispositifs pour déterminer la masse M d'un massif de fondation supportant un poteau de masse m connue, et la raideur K du sol sur ce massif.

La fondation d'un poteau, électrique par exemple, est réalisée en coulant un massif de béton dans une fouille. Pendant cette opération, le poteau est maintenu vertical au centre de la fouille. Parmi d'autres, deux malfaçons peuvent entacher la réalisation de cette fondation : la fouille peut être de taille insuffisante, et/ou elle peut être mal curée. Dans le premier cas le massif de béton sera sous-dimensionné, et dans le second cas, la liaison entre le massif de béton et le sol en place sera très mauvaise. Ces deux malfaçons réduiront la stabilité du poteau. Naturellement, on peut contrôler la qualité de la fouille avant de couler le béton et mesurer le poids ou le volume du béton coulé pour savoir si la fondation est correctement réalisée. Ceci nécessite la présence d'une personne de confiance lors de la réalisation des travaux et ce n'est pas toujours possible. De plus, il peut être bon de vérifier a posteriori, après le scellement du poteau, que la liaison entre le massif et le sol reste de bonne qualité dans le temps.

On connaît des procédés dits d'analyse vibratoire des structures selon lesquels on excite mécaniquement une structure dans des conditions déterminées et parfaitement reproductibles, on mesure chaque fois les signaux d'excitation mécanique et de réponse mécanique des divers éléments de la structure, on traite ces mesures pour en déduire une fonction de transfert qui est un rapport entre les signaux de réponse mécanique et les signaux d'excitation mécanique et on répète ces mesures à intervalles de temps.

Ces procédés permettent de savoir si des fissures sont apparues dans la structure. Ils permettraient probablement de savoir si la liaison entre le massif et le sol ne se modifie pas dans le temps, mais ils ne permettent pas de connaître, a posteriori, la masse M du massif en béton portant un poteau de masse m connue.

En effet dans la méthode impulsionnelle classique, le massif de fondation de masse M est représenté par un système à un degré de liberté, comprenant une masse rigide M reposant sur un ressort de raideur K en parallèle avec un amortisseur de coefficient C. Ces deux derniers éléments représentent l'action du sol dans lequel est encastré le massif de béton : le ressort schématise l'élasticité de ce sol, alors que l'amortisseur traduit le rayonnement d'énergie mécanique dont il est le siège. En donnant un choc vertical f(t) au centre de la masse et en mesurant la réponse x(t) de celle-ci, au même endroit et selon la même direction, on peut calculer la fonction de transfert du système à un degré de liberté et en extraire très facilement les paramètres M, C et K.

Mais dans le cas où le massif supporte un poteau de masse m, on remarque que la fonction de transfert présente deux pics.

La méthode impulsionnelle classique décrite ci-dessus ne peut plus être utilisée pour déterminer la masse M du massif et la raideur K.

Le but de la présente invention est de proposer un procédé pour déterminer la masse M d'un massif de fondation supportant un poteau de masse m connue, et la raideur de liaison sol/massif K, en vue de contrôler, a posteriori, le scellement du poteau dans le sol.

L'invention atteint son but par le fait que :
on excite mécaniquement ledit massif en lui appliquant des signaux d'excitation mécanique f(t) selon un axe vertical,
on mesure simultanément les signaux d'excitation mécanique f(t) et les signaux de réponse mécanique x(t) selon des axes verticaux pendant une durée suffisante pour que lesdits signaux soient complètement amortis,
on applique aux signaux d'excitation mécanique f(t) et aux signaux de réponse mécanique x(t) une transformation de Fourier,
on calcule la fonction de transfert $T(w)$ en divisant la transformée de Fourier du signal de réponse mécanique par la transformée de Fourier du signal d'excitation mécanique,
ladite fonction de transfert présentant des pics correspondant respectivement à la fréquence de résonnance du massif au pilonnement et à la fréquence de résonnance du poteau au mode de vibration axiale,
on recherche la courbe théorique la plus proche de la fonction de transfert calculée et qui matérialise la fonction de transfert d'un système à deux degrés de liberté, modélisant respectivement le massif de masse M et le poteau de masse m,
on identifie les constantes (résidu r1, résonnance w1 et w2 et amortissement) de cette courbe théorique,
on détermine la masse M du massif de fondation à l'aide de la formule approximative :

$$M = 1/r1 - (1 - (w1/w2)^2)^{-2} m$$

et on détermine la raideur de liaison sol/massif K à l'aide de la formule exacte :

$$K = M(w1^2 + W2^2) / 2 - 0.5 \, |M^2(W1^2 - W2^2)^2 - 4w1^2 w2^2 Mm|^{0.5}$$

formule à laquelle on pourra avantageusement substituer, dans les cas usuels, la formule approchée :

$$K = M \, w1^2$$

Il a été en effet constaté qu'il est plus correct de représenter le poteau et son massif de fondation par un système à deux degrés de liberté. L'étage inférieur du système modélise le massif de béton encastré dans le sol, alors que l'étage supérieur permet de représenter le mode fondamental de vibration axiale du poteau lui-même. L'originalité de l'invention consiste à retenir ce modèle à deux degrés de liberté pour l'interprétation des mesures et la détermination de la masse M du massif et de la raideur de liaison sol/massif K.

De préférence, on applique le choc vertical sur la face supérieure du massif de fondation près du pied du poteau.

Avantageusement, on applique ledit choc vertical à l'aide d'un impacteur (marteau ou masse tombante) instrumenté par un capteur de force.

Avantageusement on mesure les signaux de réponse mécanique du massif en mesurant la vitesse ou l'accélération verticale du massif en plusieurs points voisins du pied du poteau et en faisant la moyenne des vitesses ou accélérations mesurées. On mesure la vitesse ou l'accélération verticale du massif à l'aide d'un capteur de mouvement (géophone ou accéléromètre).

De manière à éliminer tous les bruits, on fait la moyenne des transformées de Fourier des signaux d'excitation mécanique et de vitesse (ou d'accélération) mesurés lors de plusieurs chocs successifs avant de calculer la fonction de transfert.

Avantageusement on stocke les valeurs des mesures de signaux d'excitation mécanique et de réponse mécanique sur un support magnétique, on traite les valeurs stockées par un ordinateur et on cherche la courbe théorique la plus proche à l'aide d'un logiciel dit "d'analyse modale ou d'identification paramétrique".

Un objectif de la présente invention est également de proposer un dispositif relativement léger et peu coûteux qui permette la mise en oeuvre du procédé.

Le dispositif selon l'invention est caractérisé en ce qu'il comporte :
un impacteur (marteau ou masse tombante) destiné à être utilisé pour donner des chocs verticaux sur le massif de fondation et instrumenté par un capteur de force mesurant la force du choc, au moins un capteur de mouvement (géophone ou accéléromètre) destiné à mesurer la vitesse ou l'accélération de déplacement vertical du massif de fondation sous l'action du choc du marteau, un micro-ordinateur relié au capteur de force de l'impacteur et au capteur de mouvement par l'intermédiaire d'interfaces, numérisant les signaux reçus de ceux-ci correspondant à la force du choc de l'impacteur et à la vitesse ou accélération de déplacement du massif en fonction du temps, et susceptible de calculer la masse M du massif de fondation et la raideur de liaison sol/massif K à l'aide de programmes appropriés.

Un avantage de l'invention réside dans le fait que les éléments du dispositif existent dans le commerce et que l'ensemble forme un ensemble peu encombrant, de faible poids et facile à transporter par un opérateur.

La description suivante se réfère aux dessins annexés qui représentent, sans aucun caractère limitatif, un exemple de réalisation et d'utilisation d'un dispositif selon l'invention.

La figure 1 représente schématiquement un massif de fondation pour supporter un poteau, correctement réalisé.

La figure 2 représente au contraire un massif de béton coulé dans une fouille incorrecte.

La figure 3 représente le système à deux degrés de liberté modélisant l'ensemble constitué par le massif de fondation et son poteau.

La figure 4 est une vue du dessus du massif de fondation montrant les emplacements préférentiels des équipements de mesure.

La figure 5 donne l'allure de la fonction de transfert calculée pour un massif sain.

La figure 6 montre le calage de la courbe théorique du système à deux degrés de liberté.

La figure 7 montre l'allure de la fonction de transfert calculée pour un massif défectueux.

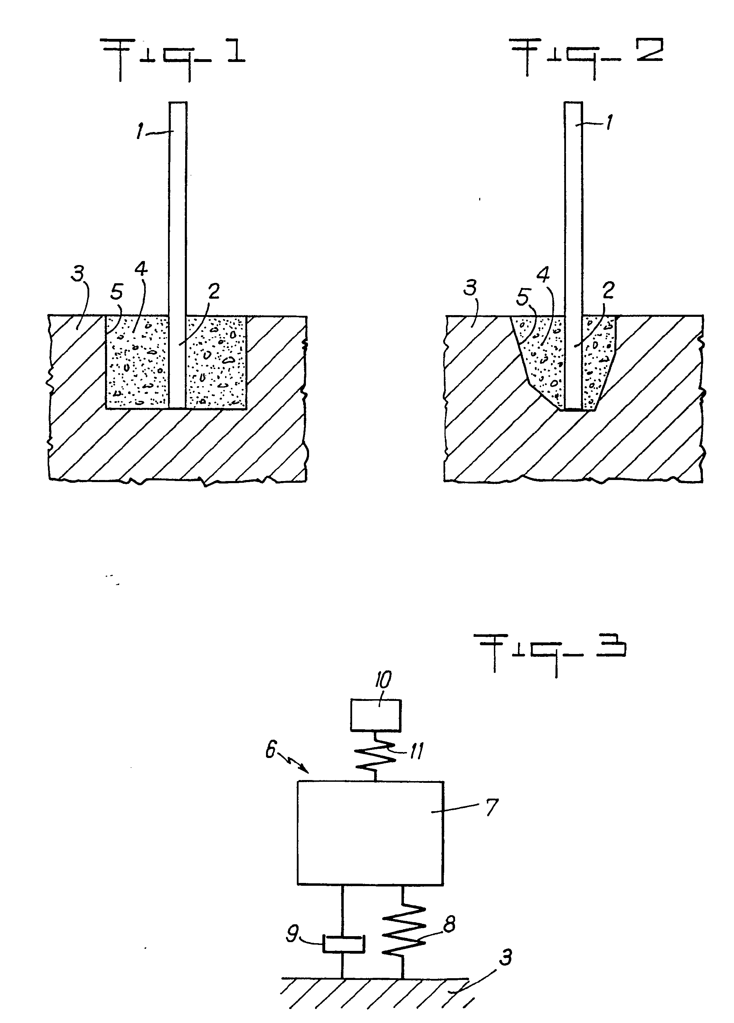

La figure 1 représente un poteau 1, qui peut être un poteau électrique ou un poteau de support de téléphérique par exemple, dont le pied 2 est fixé dans le sol 3 à l'aide d'un massif en béton 4 coulé dans une fouille 5. La qualité du scellement du poteau 1 est fonction du volume ou de la masse M du massif 4 et de la qualité de liaison entre le sol 3 et le massif 4.

La figure 2 montre un exemple de scellement de poteau qui est réalisé par un massif coulé dans une fouille 5 trop petite et mal curée. La vérification visuelle de l'ouvrage après réalisation ne permet pas de s'assurer que la masse M du massif 4 est conforme au cahier des charges.

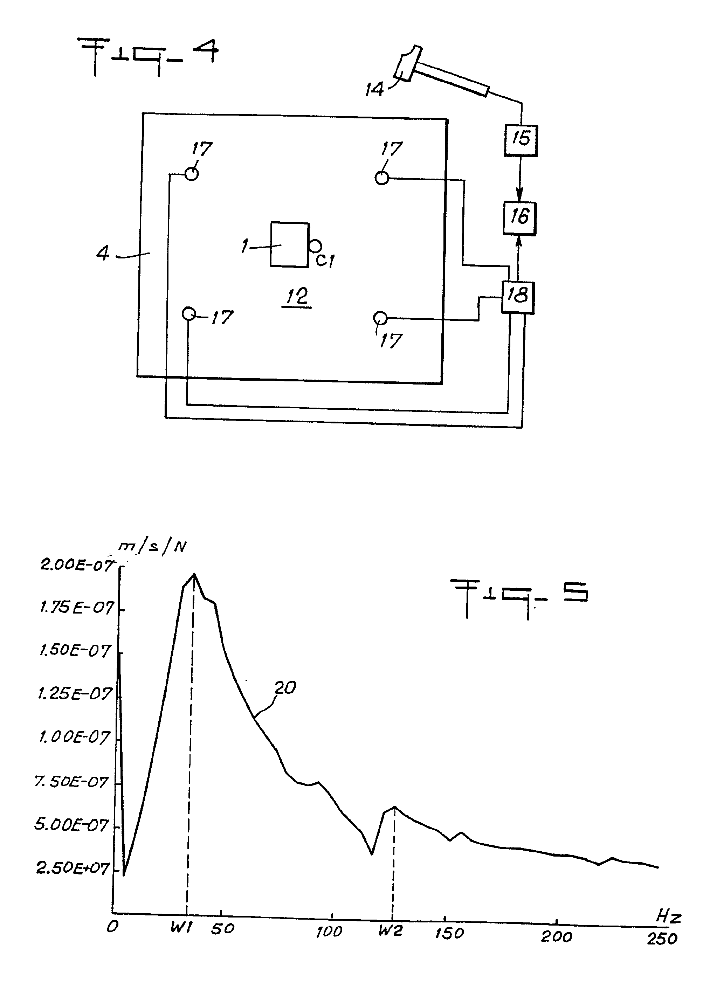

La figure 3 montre le schéma d'un système 6 à deux degrés de liberté qui modélise le plus correctement possible le poteau 1 de masse m connue et sa fondation 4.

Le premier étage de ce système 6 comprend un corps rigide 7 de masse M qui est relié au sol 3 par un ressort 8 de raideur K et un amortisseur 9 de coefficient C. Le ressort 8 schématise l'élasticité du sol 3 et l'amortisseur 9 traduit le rayonnement d'énergie mécanique dont il est le siège.

Le deuxième étage de ce système 6 comprend un deuxième corps rigide 10 de masse m qui est relié au corps rigide 7 de masse M par un ressort 11 de raideur k.

Le premier étage modélise le massif de béton 4 encastré dans le sol 3 et le deuxième étage permet de représenter le mode fondamental de vibration axiale du poteau 1.

En donnant un choc vertical f(t) au centre du corps rigide 7 et en mesurant la réponse mécanique x(t) de ce dernier, au même endroit et selon la même direction, on peut calculer la fonction de transfert T(w) de ce système 6 à deux degrés de liberté. Cette fonction de transfert idéale présente deux pics de fréquence w1 et w2 qui correspondent, respectivement, à la fréquence propre de résonnance w1 du massif de fondation 4 de masse M dans un mouvement de pilonnement, et à la fréquence propre de résonnance w2 du mode fondamental de vibration axiale du poteau 1. Cette fonction de transfert idéale est caractérisée par des constantes telles que le résidu r1 associé à la fréquence w1 et les fréquences w1 et w2.

On démontre que lorsque l'écart entre w1 et w2 est important, on peut relier les caractéristiques mécaniques M et K de l'ensemble massif+sol par les relations approximatives :

$$1/r1 = M+(1 - (w1/w2)^2)^{-2}m$$

et

$$K = M\, w1^2$$

Le principe de l'invention consiste à calculer la fonction de transfert T(w) expérimentale obtenue en divisant la transformée de Fourier du signal de réponse mécanique x(t) par la transformée de Fourier du signal de choc f(t) appliqué sur la face supérieure 12 du massif de fondation 4, à tracer le graphique de cette fonction de transfert, à rechercher la courbe de la fonction de transfert théorique d'un système à deux degrés de liberté qui se rapproche le plus de la courbe de la fonction de transfert issue de l'expérience, à déterminer les constantes r1, w1 et w2 de cette fonction de transfert théorique et à calculer les valeurs mécaniques M et K du massif de fondation. Il faut naturellement mesurer les signaux de choc f(t) et les signaux de réponse mécanique x(t) pendant la durée de l'expérience. La durée de l'expérience est telle que les signaux de réponse mécanique x(t) sont totalement amortis à la fin des mesures.

Le dispositif selon l'invention comporte un impacteur qui peut être avantageusement un marteau 14 instrumenté par un capteur de force, que l'on trouve couramment dans le commerce et qui ne sera pas décrit davantage dans la présente description. Le marteau 14 est relié par une interface appropriée 15 à un micro-ordinateur 16 qui reçoit des informations concernant les signaux de choc f(t). La réponse mécanique au choc appliqué par le marteau 14 sur le massif de fondation 4 est mesurée par une pluralité de capteurs de mouvement, des géophones 17 par exemple, également reliés au micro-ordinateur 16 par l'intermédiaire d'une interface 18. Chaque géophone 17 est de type connu et consiste en un capteur sismique de vitesse. Le micro-ordinateur 16 est muni de moyens de stockage de données et de programmes. L'un de ces programmes dit "d'analyse modale ou d'identification paramétrique" permet de rechercher la fonction de transfert théorique la plus proche de la fonction de transfert calculée à partir des données mesurées pendant l'expérience.

Comme on le voit sur la figure 4, on applique des chocs verticaux en C1 au voisinage du pied du poteau 1 sur la face supérieure 12 du massif 4. Les géophones 17, au nombre de quatre sur le dessin, sont disposés autour du poteau 1 et à égale distance de celui-ci. Le micro-ordinateur 16 fait la moyenne des signaux de réponse x(t) des différents géophones. Il est également souhaitable, pour minimiser les bruits de mesure, de réaliser plusieurs mesures x(t) à la suite de plusieurs chocs f(t), et de faire la moyenne des mesures faites avant de calculer la fonction de transfert expérimentale. La fonction de transfert est calculée selon une technique numérique classique, à partir des auto-spectres et des spectres croisés des signaux de chocs et de réponse.

Le marteau 14 peut être remplacé par une masse tombante instrumentée par un capteur de force. Les géophones 14 peuvent également être remplacés par des accéléromètres qui mesurent l'accélération du déplacement du massif 4 sous l'action des chocs.

Le demandeur a vérifié la validité de son procédé et de la théorie décrite ci-dessus en faisant installer deux poteaux identiques sur une aire d'essai. Le premier de ces poteaux était correctement scellé dans le sol, la fouille ayant été réalisée dans des conditions soignées. Le second poteau au contraire était mal scellé, la fouille ayant été volontairement réalisée trop petite et mal curée. Le volume des fouilles avait été mesuré avant qu'elles ne soient remplies de béton, et la quantité de béton coulée dans chaque fouille avait été pesée. Le poids de béton coulé dans la fouille correctement réalisée fut évalué à 23 tonnes (10 m3), contre 9.2 tonnes coulées dans la fouille volontairement baclée (4 m3). La méthode décrite ci-dessus fut appliquée sur les deux massifs.

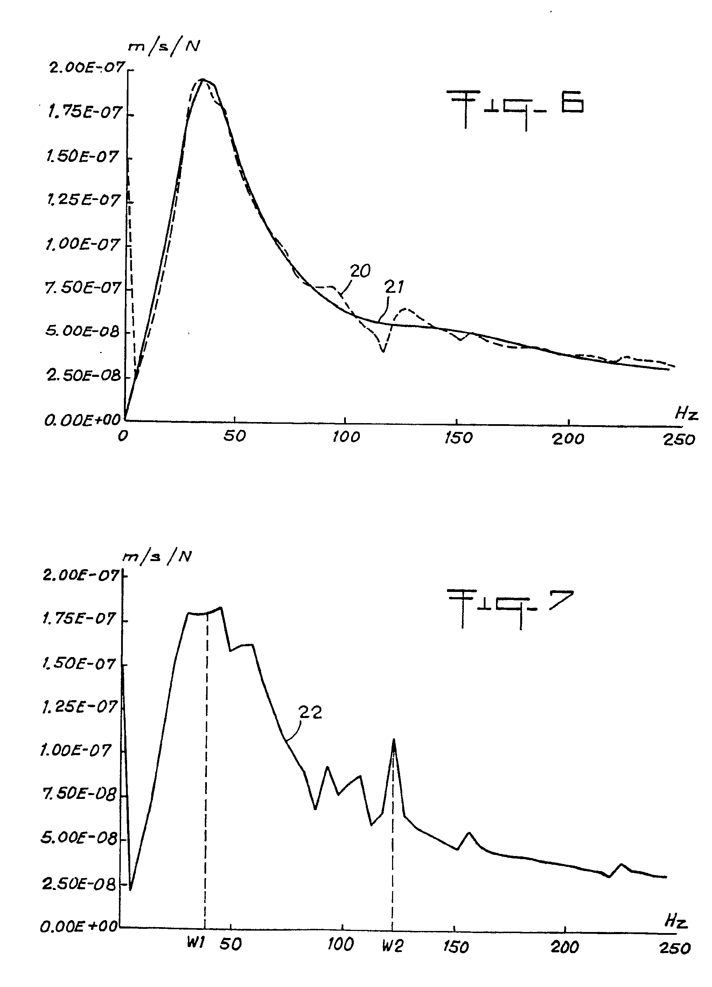

La figure 5 présente la fonction de transfert 20 mesurée entre la réponse verticale du massif sain selon son axe et le choc vertical donné au point C1. On reconnaît sans ambiguïté les deux résonnances du système, l'une w1 associée au mode de pilonnement du massif 4 et l'autre w2 au mode de vibration axiale du poteau 1. Ces deux résonnances ont des valeurs de 35.7 Hz et 130.8 Hz. Le résidu r1 associé à la première résonnance a été calculé en calant la courbe théorique 21 de la fonction de transfert d'un système à deux degrés de liberté sur la fonction de transfert 20 comme on le voit sur la figure 6. Le résidu r1 de cette courbe théorique 21 vaut $3.92\ 10^{-5}$ m/s/N. Le poteau ayant une masse de 2.8 tonnes, le calcul selon le procédé proposé fournit pour le massif sain une masse égale à 21920 kg au lieu des 23 tonnes attendues et une raideur K de $1.10\ 10^9$ N/m.

La figure 7 présente enfin la fonction de transfert 22 mesurée entre la réponse verticale du massif défectueux selon son axe et le choc vertical donné en C1. On y reconnaît encore, sans ambiguïté, les deux résonnances du système (35.6 Hz et 121.2 Hz). Le résidu associé à la première résonnance vaut 7.88

$10^{-5}$ m/s/N. Le poteau 1 ayant encore une masse de 2.8 tonnes, on obtient : M = 9370 kg (pour 9.2 tonnes attendues) et K = 0.47 $10^9$ N/m.

On voit donc que le procédé proposé est valable pour le contrôle des massifs de fondation 4 de poteaux 1. Il permet de déterminer rapidement la masse M du massif, et il fournit une indication sur la qualité de la liaison massif/sol. Le poids du dispositif utilisé est voisin de 10 kg, y compris l'unité d'acquisition et de traitement. Le contrôle peut être mené à bien par un opérateur seul, dans un temps inférieur à un quart d'heure par poteau, installation et repliement des capteurs compris.

**Revendications**

1. Procédé pour déterminer la masse m d'un massif de fondation (4) supportant un poteau (1) de masse m connue, et la raideur de liaison sol/Massif K, en vue de contrôler a posteriori le scellement du poteau (1) dans le sol (3),

   caractérisé en ce que

   on excite mécaniquement ledit massif (4) en lui appliquant des signaux d'excitation mécanique f(t) selon un axe vertical,

   on mesure simultanément les signaux d'excitation mécanique f(t) et les signaux de réponse mécanique x(t) selon des axes verticaux pendant une durée suffisante pour que lesdits signaux soient complètement amortis,

   on applique aux signaux d'excitation mécanique f(t) et aux signaux de réponse mécanique x(t) une transformation de Fourier,

   on calcule la fonction de transfert T(w) en divisant la transformée de Fourier du signal de réponse mécanique par la transformée de Fourier du signal d'excitation mécanique,

   ladite fonction de transfert (20) présentant des pics correspondant respectivement à la fréquence de résonnance du massif (4) au pilonnement et à la fréquence de résonnance du poteau (1) au mode de vibration axiale,

   on recherche la courbe théorique (21) la plus proche de la fonction de transfert (20) calculée et qui matérialise la fonction de transfert d'un système (6) à deux degrés de liberté, modélisant respectivement le massif de masse M et le poteau de masse m,

   on identifie les constantes (résidu r1, résonnance w1 et w2 et amortissement) de cette courbe théorique (21),

   on détermine la masse m du massif de fondation (4) à l'aide de la formule approximative :

   $$M = 1/r1 - (1 - (w1/w2)^2)^{-2}m$$

   et on détermine la raideur K de liaison sol/massif K à l'aide de la formule exacte :

   $$K = m(w1^2 + w2^2) / 2 - 0.5 \mid m^2(w1^2 - w2^2)^2 -$$

   $$4w1^2 w2^2 mm \mid^{0.5}$$

   formule à laquelle on pourra avantageusement substituer, dans les cas usuels, la formule approchée :

   $$K = m\, w1^2.$$

2. Procédé selon la revendication 1 caractérisé en ce qu'on applique le choc vertical sur la face supérieure (12) du massif de fondation (4) près du pied du poteau (1).

3. Procédé selon la revendication 2 caractérisé en ce qu'on applique ledit choc vertical à l'aide d'un impacteur (marteau ou masse tombante) (14) instrumenté par un capteur de force.

4. Procédé selon l'une quelconque des revendications 2 et 3 caractérisé en ce qu'on mesure les signaux de réponse mécanique du massif (4) en mesurant la vitesse ou l'accélération verticale du massif (4) en plusieurs points voisins du pied du poteau (1) et en faisant la moyenne des vitesses ou accélérations mesurées.

5. Procédé selon la revendication 4 caractérisé en ce qu'on mesure la vitesse ou l'accélération verticale du massif (4) à l'aide d'un capteur de mouvement (17) (géophone ou accéléromètre).

6. Procédé selon l'une quelconque des revendications 2 à 5, caractérisé en ce qu'on fait la moyenne des transformées de Fourier des signaux d'excitation mécanique et de vitesse (ou d'accélération) mesurés lors de plusieurs chocs successifs avant de calculer la fonction de transfert.

7. Procédé selon l'une quelconque des revendications 1 à 7 caractérisé en ce qu'on stocke les valeurs des mesures de signaux d'excitation mécanique et de réponse mécanique sur un support magnétique, en ce qu'on traite les valeurs stockées par un ordinateur (16) et en ce qu'on cherche la courbe théorique (21) la plus proche à l'aide d'un logiciel dit "d'analyse modale ou d'identification paramétrique".

8. Dispositif pour la mise en oeuvre du procédé selon l'une quelconque des revendications précédentes caractérisé en ce qu'il comporte :

   un impacteur (marteau ou masse tombante) (14) destiné à être utilisé pour donner des chocs verticaux sur le massif de fondation (4) et instrumenté par un capteur de force mesurant la force du choc,

   au moins un capteur de mouvement (géophone ou accéléromètre) (17) destiné à mesurer la vitesse ou l'accélération de déplacement vertical du massif de fondation (4) sous l'action du choc de l'impacteur (14),

un micro-ordinateur relié au capteur de force de l'impacteur et au capteur de mouvement par l'intermédiaire d'interfaces, numérisant les signaux reçus de ceux-ci correspondant à la force du choc de l'impacteur et à la vitesse ou accélération de déplacement du massif (4) en fonction du temps, et susceptible de calculer la masse M du massif de fondation (4) et la raideur de liaison sol/massif K à l'aide de programmes appropriés.

Fig. 1

Fig. 2

Fig. 3

Fig. 4

Fig. 5

Fig-6

Fig-7

EP 0 438 347 A1

))) Office européen   **RAPPORT DE RECHERCHE EUROPEENNE**   Numero de la demande
     des brevets

EP   91 40 0083

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | WO-A-8 707 378 (CENTRE EXP. DE RECHERCHES ET D'ETUDES DU BATIMENT) <br> * page 3, ligne 17 - page 4, ligne 11 * <br> * page 5, ligne 22 - page 6, ligne 2 * <br> * page 8, ligne 13 - page 9, ligne 20 * <br> * page 14, ligne 6 - page 15, ligne 10 * <br> * page 17, ligne 23 - page 19, ligne 12; figures 1-9 * <br><br> --- | 1,3-8 | E02D27/42 <br> G01N3/30 |
| A | EP-A-121 395 (RESEARCH DEVELOPMENT CORP.) <br> * page 2, ligne 12 - page 3, ligne 22 * <br> * page 5, ligne 8 - page 6, ligne 21; figures 3-5 * <br><br> --- | 1,3,8 | |
| A | GB-A-2 083 913 (SYMINIX) <br><br> ----- | | |

**DOMAINES TECHNIQUES RECHERCHES (Int. Cl.5 )**

E02D
E21B
G01N
G01M

Le présent rapport a été établi pour toutes les revendications

| Lieu de la recherche | Date d'achèvement de la recherche | Examinateur |
|---|---|---|
| LA HAYE | 28 MARS 1991 | BELLINGACCI F. |